# EUROPÄISCHE PATENTSCHRIFT

(11) **EP 1 542 852 B1**
(45) Veröffentlichungstag und Bekanntmachung des Hinweises auf die Patenterteilung: **15.02.2006**
(21) Anmeldenummer: 03750594.8
(22) Anmeldetag: 19.09.2003
(51) Int. Cl.: B29C 47/34, B29C 53/10, B29C 49/04

(54) **VORRICHTUNG ZUR HERSTELLUNG VON FOLIENBAHNEN AUS EINEM FOLIENSCHLAUCH DURCH AUFSCHNEIDEN AN DER ABGEQUETSCHTEN LUFTBLASE**
DEVICE FOR PRODUCING FILM WEBS FROM A FILM TUBE BY CUTTING OPEN THE SQUEEZED AIR BUBBLE
PROCEDE DE FABRICATION DE FEUILLES A PARTIR D'UN FILM TUBULAIRE PAR DECOUPE DE LA BULLE D'AIR COMPRIMEE

(30) Priorität: 20.09.2002 DE 10243959
(43) Veröffentlichungstag der Anmeldung: 22.06.2005
(73) Patentinhaber: Windmöller & Hölscher KG, 49525 Lengerich (DE)
(72) Erfinder: BOSSE, Frank, 49549 Tecklenburg (DE)
(86) Internationale Anmeldenummer: PCT/EP2003/010504
(87) Internationale Veröffentlichungsnummer: WO 2004/028780

(56) Entgegenhaltungen:
- DE-A- 4 202 450
- DE-C- 19 501 668

## Beschreibung

Die Erfindung betrifft eine Vorrichtung und ein Verfahren zur Herstellung von Folienbahnen aus einer Schlauchfolie
- mit einer Flachlegevorrichtung, welche vorzugsweise aus zwei dachförmig gegeneinander angestellten Flachlegeplatten besteht,
- und einer Abquetschvorrichtung, welche vorzugsweise aus einem Abquetschrollenpaar besteht und welche die Folie zusammenpresst und
- zumindest einer Schneidvorrichtung vorgesehen ist, welche den Folienschlauch entlang seiner Förderrichtung schlitzt.

Vorrichtungen dieser Art kommen in der Regel im Zusammenhang mit Schlauchfolienextrusionsanlagen zum Einsatz. Oft wird ein Folienschlauch extrudiert, flachgelegt, abgequetscht und anschließend einer Wickelvorrichtung zugeführt. Besonders erwähnenswert ist noch, dass die Schlauchfolienbahn in der Regel nach der Abquetschung eine so genannte Reversiervorrichtung durchläuft.

Alle vorgenanten Funktionseinheiten sind drudcschriftlich bekannt. So beansprucht zum Beispiel die DE 100 40 055 eine solche Reversiervorrichtung und zeigt auch die zugehörigen Abquetsch- und Flachlegevorrichtungen.
Um den Folienschlauch in Folienbahnen zu verwandeln, bedient man sich verschiedenartiger Schneidvorrichtungen, welche an der Wickelvorrichtung angebracht sind und die Schläuche unmittelbar vor Beginn des Wickelprozesses schlitzen. In der Regel werden zu diesem Zweck Besäumschnitte an beiden Kannten des flachgelegten Folienschlauches durchgeführt. Bei diesem Vorgang entsteht jedoch erheblicher Abfall. Da moderne Regelverfahren jedoch eine genaue Einstellung des Durchmessers der extrudierten Schlauchfolie und damit der Breite des flachgelegten Folienschlauchs erlauben, wird vielfach auf einen Besäumschnitt verzichtet. Stattdessen werden Schlitzmesser an den Wickelvorrichtungen angebracht, welche die flachgelegte Folienschlauchbahn unmittelbar an ihren Kannten aufschlitzen und damit unnötigen Abfall vermeiden.
Diese Art der Herstellung von Folienbahnen aus Folienschläuchen eignet sich jedoch nicht für dünne, empfindliche oder klebrige Folien. Diese Folien werden durch die Einwirkung des Schlitzmessers auf den flachgelegten Folienschlauch in Mitleidenschaft gezogen. Folien der vorgenannten Art werden also nach wie vor mit Hilfe von Besäumschnitten hergestellt.

Daher besteht die Aufgabe der vorliegenden Erfindung darin, eine Vorrichtung vorzuschlagen, welche eine schonendere Herstellung von Flachfolien aus Schlauchfolien erlaubt.

Die Aufgabe wird dadurch gelöst, dass
- in Förderrichtung des Folienschlauches vor der Abquetschvorrichtung (3) zumindest eine Vorabquetschvorrichtung vorgesehen ist,
- welche einen Restbestand an Luft in dem Folienschlauch belässt, so dass in dem Bereich zwischen der Abquetschvorrichtung und der zumindest einen Vorabquetschvorrichtung ein statisches Luftpolster gebildet wird,
- und dass der Folienschlauch mit der Schneidvorrichtung im Bereich des statischen Luftpolsters schlitzbar ist.

Durch diese Maßnahme kann die besagte Schneidvorrichtung den Folienschlauch aufschlitzen, womit ein regelrechtes Schneiden, aber auch ein Perforieren des Schlauches, dem ein wesentlich späteres Trennen folgen kann, gemeint ist- und in den noch nicht völlig flachgelegten Folienschlauch eingreifen, ohne die Folienwände zu beschädigen. Das Schneiden des Folienschlauches im Bereich des statischen Luftpolsters führt hierbei zu geraden Schnitten, die im Bereich der oft flatternden, instabileren, nicht vorabgequetschten Folienblase nicht möglich wären.

Unter statischem Luftpolster ist dabei ein Bereich zu verstehen, in dem die noch im Folienschlauch enthaltene Luft sich ruhiger verhält als in dem in Förderrichtung des Folienschlauches vorgelagerten Bereich des Folienschlauchs.
Hierbei ist es vorteilhaft, zwischen der Flachlegevorrichtung und der Schneidvorrichtung eine Vorabquetschvorrichtung vorzusehen, die zwar den Folienschlauch weitestgehend flach legt, aber einen Restbestand an Luft im Folienschlauch belässt. Das so entstehende statische Luftpolster verhindert, dass die Messer der Schneidvorrichtung den Folienschlauch bzw. die Folienbahnen beschädigen.

Die beschriebene Vorabquetschvorrichtung besteht vorteilhafterweise aus zwei Abquetschwalzen. Diese haben in der Regel einen größeren Anstand zueinander als Abquetschwalzen.

Eine weitere bevorzugte Ausführungsform der Vorrichtung zur Herstellung von Folienbahnen weist eine Reversiereinrichtung auf, die die flach auf einander liegenden, durch den Schlitzvorgang entstandenen Folienbahnen reversiert.

Bei der Herstellung von Klebefolie ist es besonders vorteilhaft, wenn die klebrige Folienschicht den Außenumfang des extrudierten Folienschlauchs bildet. Auf diese Weise wird ein Verkleben der beiden Folienbahnen insbesondere bei ihrem gemeinsamen Transport durch die Reversiervorrichtung vermieden.
Ein Ausführungsbeispiel der Erfindung geht aus den Zeichnungen und der gegenständlichen Beschreibung hervor.

Die einzelnen Figuren zeigen:
- Fig. 1: Eine vollständige Ansicht einer erfindungsgemäßen Vorrichtung
- Fig. 2: Eine Seitenansicht dieser Vorrichtung
- Fig. 3: Eine Seitenansicht einer erfindungsgemäßen Vorrichtung

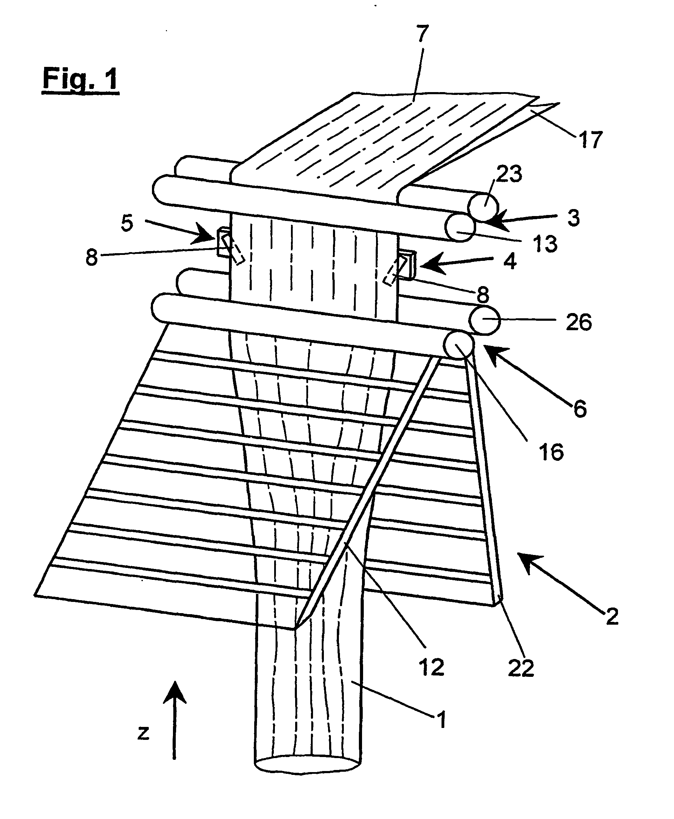

Fig. 1 zeigt eine erfindungsgemäße Vorrichtung zur Herstellung von Folienbahnen 7, 17 aus einer Schlauchfolie 1.
Der von einer nicht gezeigten Schlauchfolienextrusionseinheit extrudierte Folienschlauch 1 weist gewöhnlich ein in radialer Richtung kreisrundes Profil auf. In Transportrichtung z schließt sich eine Flachlegevorrichtung 2 an, die das Profil sukzessive von zwei gegenüber liegenden Seiten her zusammendrückt. Hinter der Flachlegevorrichtung 2 wird der Folienschlauch 1 durch eine Vorabquetscheinrichtung 6 geführt. Die zugehörigen Vorabquetschwalzen 16 und 26 sind derart voneinander beabstandet, dass die geraden Seiten des Folienschlauches 1 noch nicht aufeinander liegen. Durch das noch nicht vollständige Abquetschen verbleibt ein Luftpolster im Folienschlauch 1. Es schließen sich zwei Schneidvorrichtungen 4, 5 an. Diese Schneidvorrichtungen 4, 5 umfassen jeweils ein Messer 8, die auf nicht näher dargestellte Weise am Maschinengestell befestigt sind. Diese Messer 8 sind derart angeordnet, dass sie den Folienschlauch 1 an seinen Endrundungen aufschlitzen. Im weiteren Verlauf durchlaufen die durch die Schlitzung entstandenen Folienbahnen 7, 17 die Abquetschvorrichtung 3, die aus zwei Abquetschwalzen 13, 23 besteht. Diese Vorrichtung dient dazu, die beiden Folienbahnen 7, 17 flach aufeinander zu drücken und damit den Einschluss von Luft zwischen den beiden Folienbahnen 7, 17 zu verhindern. Der Verdeutlichung halber sind die Folienbahnen 7, 17 in Figur 1 auseinander laufend dargestellt, werden aber flach aufeinander liegend einer nicht dargestellten Reversiereinrichtung zugeführt. Eine geeignete Reversiereinrichtung ist beispielsweise in der Druckschrift DE 100 40 055 A1 näher beschrieben. Die gemeinsame Führung der beiden aufeinanderliegenden Folien 7, 17 in einer Reversiervorrichtung ist grundsätzlich auch in einer anderen Reversiervorrichtung möglich. In diesem Zusammenhang ist noch erwähnenswert, dass es auch gattungsgemäße Vorrichtungen zur Herstellung von Folienbahnen aus einer Schlauchfolie gibt, die ganz ohne Reversiervorrichtung auskommen.

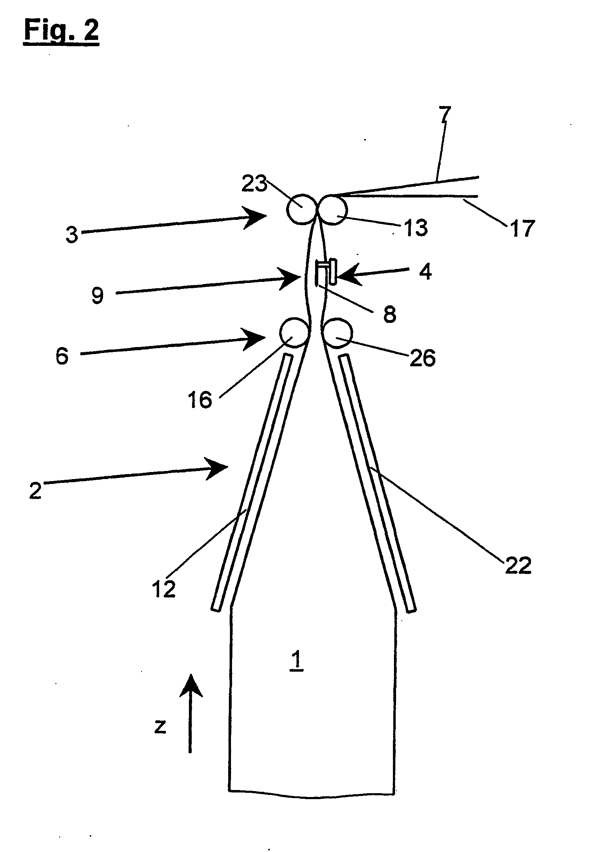

Die in Fig. 2 dargestellte Seitenansicht der erfindungsgemäßen Vorrichtung verdeutlicht den Prozess des Flachlegens des Folienschlauches in der Flachlegevorrichtung 2, von der nur die beiden Seiten der Flachlegeplatten 12, 22 zu sehen sind. Deutlich zu erkennen ist, dass die sich anschließenden Vorabquetschwalzen 16, 26 einen festgelegten Abstand voneinander haben. Dieser Abstand wird, u. a. in Abhängigkeit der Betriebsparameter, derart gewählt, dass sich in Höhe der Schneidvorrichtung 4 noch ein Luftpolster innerhalb des Folienschlauches befindet. Aufgrund des Luftpolsters haben die Teile des Folienschlauchs 1, die nach dem Schlitzen die Folienbahnen 7, 17 bilden, einen etwas größeren Abstand voneinander als beim Durchlaufen der Abquetschvorrichtung. Die Abquetschwalzen 13, 23 verhindern, dass die Luft durch die Abquetschvorrichtung 3 entweichen kann. Auf diese Weise kann der Folienschlauch seitlich geschlitzt werden, ohne dass Gefahr besteht, auch sehr dünne oder klebrige Folienbahnen 7, 17 durch Kontakt mit den Messern 8 zu beschädigen.
Um im Innem des Folienschlauchs einen ausreichenden Druck aufrechtzuerhalten, kann es - in Anbetracht des von der Schneidevorrichtung 4 erzeugten Schlitzes - notwendig sein, dem Folienschlauch 1 beständig Luft zuzuführen.
Vorrichtungen, die dazu in der Lage sind, sind bekannt. So wird dem Folienschlauch oft durch den Blaskopf Innenkühlluft zugeführt.

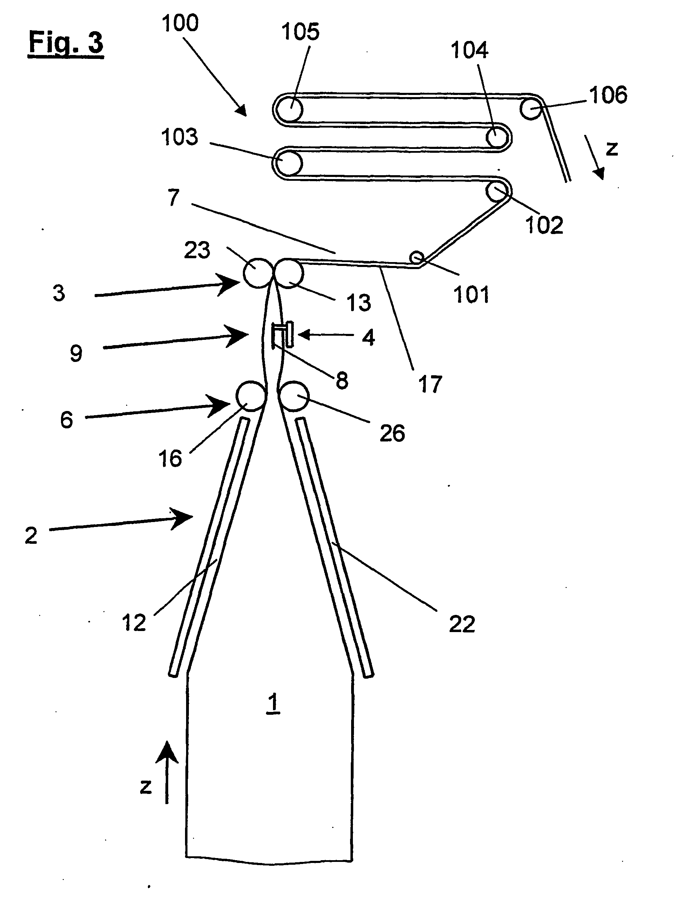

Figur 3 zeigt noch einmal die in Figur 2 dargestellte Vorrichtung, wobei noch einmal eine Reversiervorrichtung 100 mit dargestellt ist. Nachdem die Folienbahnen 1,17 die Abquetschvorrichtung 3 durchlaufen haben, laufen sie zusammen an der Führungswalze 101, der ersten Umlenkwalze 102, der ersten Luftwendestange 103, der zweiten Umlenkwalze 104 und der ersten Luftwendestange 105 vorbei. Schließlich erreichen die Folienbahnen 7, 17 mit der Abzugswalze 106 eine ortsfeste Walze, die nicht an dem Reversierprozess teilnimmt. Anschließend werden die Folienbahnen7, 17 nicht dargestellten Weiterverarbeitungs- oder Speichervorrichtungen zugeführt. Der Abstand zwischen den Folienbahnen 7, 17 ab der Abquetschvorrichtung werden unmaßstäblich groß dargestellt, um zu verdeutlichen, dass es sich hier um zwei Bahnen handelt. In der Regel werden zunächst Folienwickel gebildet. Hierbei können die Folienbahnen einzeln oder gemeinsam aufgewickelt werden.
An dieser Stelle sei noch einmal erwähnt, dass in Figur 3 lediglich der prinzipielle Aufbau einer beispielhaften, sehr weit fortgeschrittenen Reversiervorrichtung dargestellt wurde, wobei die Halterung der skizzierten Folienführungselemente 101 bis 105 sowie der eigentliche Reversiervorgang, welche durch Reversierbewegungen der Walzen und Stangen 103 bis 105 um eine vertikale Achse zustande kommt, nicht dargestellt wurde. Das erfindungsgemäße Verfahren umfasst jedoch alle Reversierverfahren.

Darüber hinaus ist noch einmal zu betonen, dass auch Reversiervorrichtungen mit abweichenden Zahlen an Umlenkwalzen 102, 104 und Wendestangen 103, 105 bekannt sind. In diesem Zusammenhang wird noch einmal auf Druckschriften wie die DE 100 40 055, die DE 43 03 952 oder die EP 0 873 845 verwiesen.

Vorteilhaft sind insbesondere solche Reversiereinrichtungen, bei welchen jeweils eine Wendestange und jeweils eine Umlenkwalze ein Funktionspaar bilden. Bei solchen Funktionspaaren führt die eine Umlenkwalze und die eine Wendestange eine Reversierbewegung aus, welche bezüglich einer Achse stattfindet, die orthogonal zur Drehbewegung der Umlenkwalze um ihre Hauptsymmetrieachse verläuft. In aller Regel ist diese Achse vertikal und damit in Hauptförderrichtung der Folie ausgerichtet. Es sind Reversiervorrichtungen mit einem, zwei oder gar drei Funktionspaaren bekannt. Das Wort Funktionspaar und seine Bedeutung für die beschriebenen Reversiervorrichtungen wird in der Anmeldung DE 100 40 055 beschrieben.

| **Bezugszeichenliste** | |
|---|---|
| 1 | Folienschlauch |
| 2 | Flachlegevorrichtung |
| 3 | Abquetschvorrichtung |
| 4 | Schneidvorrichtung |
| 5 | Schneidvorrichtung |
| 6 | Vorabquetschvorrichtung |
| 7 | Folienbahn |
| 8 | Messer |
| 9 | statisches Luftpolster |
| 10 | Pfeil in Förderrichtung des Folienschlauches |
| 11 | |
| 12 | Seitenstrebe |
| 13 | Abquetschwalze |
| 14 | |
| 15 | |
| 16 | Vorabquetschwalze |
| 17 | Folienbahn |
| 18 | |
| 19 | |
| 20 | |
| 21 | |
| 22 | |
| 23 | Abquetschwalze |
| 24 | |
| 25 | |
| 26 | Vorabquetschwalze |
| 100-106 | Folienführungselemente |
| | |
| z | Förderrichtung des Folienschlauches |

## Patentansprüche

1. Vorrichtung zur Herstellung von Folienbahnen (7,17) aus einem Folienschlauch (1)
- mit einer Flachlegevorrichtung (2), welche vorzugsweise aus zwei dachförmig gegeneinander angestellten Flachlegeplatten (12, 22) besteht, die ihren Abstand in Förderrichtung (z) des Schlauches verringern,
- und einer Abquetschvorrichtung (3), welche vorzugsweise aus einem Abquetschrollenpaar (13, 23) besteht,
- und zumindest einer Schneidvorrichtung (4, 5), welche den Folienschlauch entlang seiner Förderrichtung schlitzt
**dadurch gekennzeichnet, dass**
- in Förderrichtung des Folienschlauches (z) vor der Abquetschvorrichtung (3) zumindest eine Vorabquetschvorrichtung (6) vorgesehen ist,
- welche einen Restbestand an Luft in dem Folienschlauch belässt, so dass in dem Bereich zwischen der Abquetschvorrichtung (3) und der zumindest einen Vorabquetschvorrichtung (6) ein statisches Luftpolster (9) gebildet wird,
- und dass der Folienschlauch (1) mit der Schneidvorrichtung (4, 5) im Bereich des statischen Luftpolsters (9) einritzbar ist.

2. Vorrichtung nach Anspruch 1
**dadurch gekennzeichnet, dass**
die Flachlegevorrichtung (2) in Förderrichtung (z) des Folienschlauchs (1) der Vorabquetschvorrichtung (6) vorgelagert ist.

3. Vorrichtung nach Anspruch 1
**dadurch gekennzeichnet, dass**
die Vorabquetschvorrichtung (6) aus einem Abquetschwalzenpaar (16, 26) besteht.

4. Vorrichtung nach einem der vorstehenden Ansprüche,
**gekennzeichnet durch**
eine Reversiervorrichtung, welche die beiden **durch** den Schlitzvorgang mit den Schneidvorrichtungen (4, 5) entstandenen Folienbahnen (7, 17) reversiert, während die Folienbahnen aufeinanderliegen.

5. Vorrichtung nach einem der vorstehenden Ansprüche,
**dadurch gekennzeichnet, dass**
die Abquetschrollen (13,21) des Abquetschrollenpaares zueinander so angeordnet sind, dass sich die Wandungen des Folienschlauchs zumindest beim Durchlaufen des Abquetschrollenpaares gegenseitig berühren.

6. Vorrichtung nach dem vorstehenden Anspruch,
**gekennzeichnet durch**
eine Reversiervorrichtung (100), bei der die Folienbahnen (7,17) an zumindest einer reversierenden Luftwendestange (103,105) und zumindest einer reversierenden Umlenkwalze (102,104) vorbeiführbar sind.

7. Vorrichtung nach dem vorstehenden Anspruch,
**dadurch gekennzeichnet,**
**dass** die Reversiervorrichtung (100) zumindest ein Funktionspaar, gebildet aus einer Luftwendestange (103,105) und einer Umlenkwalze (102,104), umfasst, wobei die Luftwendestange (103,105) und die Umlenkwalze (102,104) um eine Achse eine Reversierbewegung ausführen, die orthogonal zu der Drehrichtung der Umlenkwalze verläuft.

8. Verfahren zur Herstellung von Folienbahnen (7,17) aus einem Folienschlauch (1)
• wobei der Folienschlauch mit einer Flachlegevorrichtung (2) flachgelegt wird, welche (2) vorzugsweise aus zwei dachförmig gegeneinander angestellten Flachlegeplatten (12, 22) besteht, die ihren Abstand in Förderrichtung (z) des Schlauches verringern,
• und eine Abquetschvorrichtung (3), welche vorzugsweise aus einem Abquetschrollenpaar (13, 23) besteht, den Schlauch abquetscht
• und zumindest eine Schneidvorrichtung (4, 5), den Folienschlauch entlang seiner Förderrichtung schlitzt
**dadurch gekennzeichnet, dass**
• eine Vorabquetschvorrichtung (6), welche in Förderrichtung des Folienschlauches (z) vor der Abquetschvorrichtung (3) vorgesehen ist, eine Vorabquetschung des Folienschlauches (1) vornimmt, wobei ein Restbestand an Luft in dem Folienschlauch (1), so dass sich in dem Bereich zwischen der Abquetschvorrichtung (3) und der zumindest einen Vorabquetschvorrichtung (6) ein statisches Luftpolster bildet,
• und dass der Folienschlauch (1) mit der Schneidvorrichtung (4, 5) im Bereich des statischen Luftpolsters (9) eingeritzt wird.

9. Verfahren nach dem vorstehenden Anspruch,
**dadurch gekennzeichnet, dass**
die zumindest zwei Folienbahnen, die durch die Schlitzung des Folienschlauches entstehen, nach dem Durchlaufen des Abquetschrollenpaares durch eine Reversiervorrichtung geführt werden, wobei sich Teilbereiche der zumindest zwei Folienbahnen berühren.

## Claims

1. Device for manufacture of film tracks (7,17) of a film tube (1)
- with a lay-flat device (2), which consists preferably of two lay-flat plates (12, 22) with a mutual roof-like formation, whereby their distance decreases in the direction of conveyance (z) of the tube
- and a squeeze roller device (3), which consists preferably of a squeeze roller pair (13, 23),
- and at least a cutting device (4, 5), which slits the film tube along its direction of conveyance
**characterized in that**
in the direction of the film tube (z), before the squeeze roller device (3), at least one pre-squeeze device (6) is provided,
- which leaves a remainder of air in the film tube, so that in the region between the squeeze roller device (3) and at least one pre-squeeze roller device (6), a static air cushion is formed,
- and that the film tube (1) can be silt with the cutting device (4, 5) in the region of the static air cushion (9).

2. Device according to claim 1
**characterized in that**
before the lay-flat device (2), in the direction of conveyance (z) of the film tube (1), the pre-squeeze device (6) is positioned.

3. Device according to claim 1
**characterized in that**
the pre-squeeze device (6) consists of a pre-squeeze roller pair (16, 26)

4. Device according to one of the above claims
**characterized in that**
a reversing device, which reverses the foil tracks (7,17) generated in the slitting process with the cutting devices (4, 5), while the film tracks are lying apart.

5. Device according to one of the above claims
**characterized in that**
the pre-squeeze rollers (13, 21) of the pre-squeeze roller pair are arranged mutually in such a fashion that the walls of the film tube touch each other at least while passing through the pre-squeeze roller pair.

6. Device according to the above claim
**characterized in that**
a reversing device (100), in which the film tracks (7,17) can be conveyed bypassing one of the reversing air turning bar (103, 105) and at least one idle roller (102, 104).

7. Device according to claim 1
**characterized in that**
the reversing device (100) includes at least one function pair, built out of an air turning bar (103, 105) and an idle roller (102, 104), whereby the air turning bar (103, 105) and the idle bar (102, 104) carry out a reversing motion about an axis that is orthogonal to the direction of revolution of the idle roller.

8. Method for manufacture of film tracks (7,17) from a film tube (1)
• whereby the film tube is laid flat with a lay-flat device (2), which (2) consists preferably out of two lay-flat plates (12, 22) in a mutual roof-like formation, whose distance decreases in the direction of the conveyance (z) of the tube,
• and one pre-squeeze device (3), which consists preferably of a pre-squeeze roller pair (13, 23), squeezes the tube
• and at least one cutting device (4, 5) slits the film tube along its direction of conveyance.
**characterized in that**
• a pre-squeeze device (6), which is provided in the direction of the conveyance of the film tube (z) before the pre-squeeze roller device (3), carries out the pre-squeezing of the film tube (1), whereby a residual amount of air forms remains in the film tube (1), so that a static air cushion forms in the region between the squeeze roller device (3) and at least one pre-squeeze roller device (6),
• and that the film tube (1) is scratched in the region of the static air cushion (9) by means of the cutting device (4, 5).

9. Method according to the above claim,
**characterized in that**
at least two film tracks, which form due to the slitting through of the film tube, are guided through a reversing device after passing through the squeezing roller pair, whereby a part of the regions of the at least two film track touch each other.

## Revendications

1. Dispositif de fabrication de bandes en feuille (7, 17) à partir d'une gaine en feuille (1)
- avec un dispositif de mise à plat (2) qui est constitué de préférence de deux plaques de mise à plat (12, 22) s'appliquant l'une contre l'autre en forme de toit, qui réduisent leur écart dans la direction de convoyage (z) de la gaine,
- et un dispositif de serrage (3) qui est constitué de préférence d'une paire de rouleaux de serrage (13, 23),
- et au moins un dispositif de coupe (4, 5) qui fend la gaine en feuille le long de sa direction de convoyage,
**caractérisé en ce qu'**il est prévu
- dans la direction de convoyage de la gaine en feuille (z) en amont du dispositif de serrage (3) au moins un dispositif de pré-serrage (6),
- qui laisse subsister une quantité résiduelle d'air dans la gaine en feuille de manière à former dans la zone entre le dispositif de serrage (3) et au moins un dispositif de pré-serrage (6), un coussinet d'air statique (9),
- et **en ce que** la gaine en feuille (1) peut être entaillée avec le dispositif de coupe (4, 5) dans la zone du coussinet d'air statique (9).

2. Dispositif selon la revendication 1, **caractérisé en ce que** le dispositif de mise à plat (2) est disposé dans la direction de convoyage (z) de la gaine en feuille (1) en amont du dispositif de pré-serrage (6).

3. Dispositif selon la revendication 1, **caractérisé en ce que** le dispositif de pré-serrage (6) est constitué d'une paire de rouleaux de serrage (16, 26).

4. Dispositif selon l'une des revendications précédentes, **caractérisé par** un dispositif d'inversion qui inverse les deux bandes en feuille (7, 17) produites par l'opération de fendage avec les dispositifs de coupe (4, 5) pendant que les bandes en feuille sont superposées.

5. Dispositif selon l'une des revendications précédentes, **caractérisé en ce que** les rouleaux de serrage (13, 21) de la paire de rouleaux de serrage sont disposés l'un relativement à l'autre de façon que les parois de la gaine en feuille viennent mutuellement en contact au moins lors du passage à travers la paire de rouleaux de serrage.

6. Dispositif selon la revendication précédente, **caractérisé par** un dispositif d'inversion (100), où les bandes en feuille (7, 17) peuvent être amenées à passer devant au moins une tige de changement d'air réversible (103, 105) et au moins un rouleau de renvoi réversible (102, 104).

7. Dispositif selon la revendication précédente, **caractérisé en ce que** le dispositif de réversion (100) comprend au moins une paire fonctionnelle, constituée d'une tige de changement d'air (103, 105) et d'un rouleau de renvoi (102, 104), où la tige de changement d'air (103, 105) et le rouleau de renvoi (102, 104) exécutent un mouvement de réversion autour d'un axe qui s'étend orthogonalement à la direction de rotation du rouleau de renvoi.

8. Procédé de fabrication de bandes en feuille (7, 17) à partir d'une gaine en feuille (1)
• où la gaine en feuille est aplatie avec un dispositif de mise à plat (2) qui (2) est constitué de préférence de deux plaques de mise à plat (12, 22) s'appliquant l'une à l'autre en forme de toit, qui réduisent leur écart dans la direction de convoyage (z) de la gaine,
• et un dispositif de serrage (3) qui est constitué de préférence d'une paire de rouleaux de serrage (13, 23), comprime la gaine
• et au moins un dispositif de coupe (4, 5) fend la gaine en feuille le long de sa direction de convoyage,
**caractérisé en ce que**
• un dispositif de pré-serrage (6), qui est prévu dans la direction de convoyage de la gaine en feuille (z) en amont du dispositif de serrage (3), procède à un pré-serrage de la gaine en feuille (1), où une quantité résiduelle d'air subsiste dans la gaine en feuille (1), de manière à former dans la zone entre le dispositif de serrage (3) et au moins un dispositif de pré-serrage (6) un coussinet d'air statique,
• et **en ce que** la gaine en feuille (1) est entaillée avec le dispositif de coupe (4, 5) dans la zone du coussinet d'air statique (9).

9. Procédé selon la revendication précédente, **caractérisé en ce qu'**au moins deux bandes en feuille, qui sont produites par le fendage de la gaine en feuille, après le passage à travers la paire de rouleaux de serrage, sont guidées à travers un dispositif de réversion, où des zones partielles d'au moins deux bandes en feuille viennent en contact.
